# FASCICULE DE BREVET EUROPEEN

(11) **EP 2 160 270 B1**
(45) Date de publication et mention de la délivrance du brevet: **08.07.2015**
(21) Numéro de dépôt: 08805596.7
(22) Date de dépôt: 22.05.2008
(51) Int. Cl.: G01B 21/20, B24B 17/10, B24B 9/14

(54) **PROCÉDÉS DE DÉTECTION AUTOMATIQUE DU MATÉRIAU D'UNE MONTURE DE LUNETTES, DE LECTURE DE FORME D'UNE MONTURE ET DE DÉTOURAGE DES LENTILLES ASSOCIÉES À UNE MONTURE**
VERFAHREN ZUR AUTOMATISCHEN ERKENNUNG DES MATERIALS EINES BRILLENGESTELLS, ZUR AUSLESUNG DER FORM DES GESTELLS UND ZUR ÄTZUNG VON LINSEN FÜR DAS GESTELL
METHODS FOR THE AUTOMATIC DETECTION OF THE MATERIAL OF A SPECTACLE FRAME, READING THE SHAPE OF A FRAME, AND EDGING LENSES BELONGING TO A FRAME

(30) Priorité: 27.06.2007 FR 0704626
(43) Date de publication de la demande: 10.03.2010
(73) Titulaire: Essilor International (Compagnie Générale d'Optique), 94220 Charenton-le-Pont (FR)
(72) Inventeur: IRIBARNE, Lionel, F-94220 Charenton Le Pont (FR); JACQ, Francis, F-94220 Charenton Le Pont (FR)
(74) Mandataire: Chauvin, Vincent
(86) Numéro de dépôt international: PCT/FR2008/000705
(87) Numéro de publication internationale: WO 2009/007518

(56) Documents cités:
- DE-A1- 19 727 226
- FR-A- 2 876 806
- US-A- 6 006 592

## Description

La présente invention concerne de manière générale le domaine de la lunetterie, et plus précisément l'automatisation des étapes de détection du matériau d'une monture de lunette de type cerclée, de lecture de la forme d'une monture et de détourage des lentilles destinées à être montées sur une monture.

Elle concerne plus particulièrement un procédé de détection automatique du matériau d'une monture de lunette de type cerclée sélectionnée par un porteur, un procédé de lecture de forme de la monture et un procédé de détourage des lentilles destinées à être montées sur la monture.

La partie technique du métier de l'opticien consiste à monter une paire de lentilles ophtalmiques sur une monture de lunettes sélectionnée par un porteur.

Ce montage comporte plusieurs opérations, et notamment :
- l'acquisition par un appareil de lecture de forme des informations sur la monture nécessaires au montage, et en particulier, le palpage de la forme du brin longitudinal du drageoir, qui correspond généralement au fond du drageoir parcourant l'intérieur de chaque cercle de la monture et définit le contour interne de ces cercles et, éventuellement, le palpage du profil de ce drageoir, par un palpeur de l'appareil de lecture,
- le centrage de chaque lentille permettant de déterminer la position sur la monture de chaque lentille pour que celle-ci soit centrée en regard de la pupille de l'oeil du porteur, de manière à exercer convenablement la fonction optique pour laquelle elle a été conçue,
- l'usinage des lentilles par une machine de détourage en fonction des informations acquises sur la monture et des données de centrage.

Selon les travaux de recherche de la demanderesse, les opérations d'acquisition des informations sur la monture et d'usinage des lentilles diffèrent selon le matériau de la monture : il est donc important de prendre celui-ci en compte dès le début des étapes de montage.

Il existe deux types de matériaux utilisés pour la fabrication des montures de lunettes de type cerclées : le métal et le plastique.

Les montures métalliques sont très rigides, et requièrent une adaptation précise de la géométrie du contour des lentilles à la monture. Une acquisition précise, et donc lente, du contour interne des cercles de la monture et, éventuellement, du profil du drageoir, permet de prévoir la manière selon laquelle le biseau de la lentille va s'emboîter dans le drageoir de la monture de lunettes, et d'ajuster la forme et/ou la position du bord de la lentille en conséquence.

Dans le cas d'une monture en plastique, l'acquisition du contour interne des cercles de la monture est réalisée beaucoup plus rapidement, et l'acquisition du profil du drageoir n'est pas réalisée. Les montures en plastique sont en effet plus souples que les montures en métal et tolèrent une plus grande imprécision en ce qui concerne l'adaptation des lentilles.

La connaissance préalable du matériau de la monture permet donc de réduire sensiblement la durée du cycle de lecture des montures en plastique, car l'acquisition du contour des cercles est accélérée, et l'acquisition du profil du drageoir n'est pas réalisée.

De plus, l'usinage des lentilles peut également avantageusement tenir compte du matériau des montures sur lesquelles les lentilles sont destinées à être montées.

Les montures en plastique étant beaucoup plus déformables que les montures en métal, les lentilles destinées à être montées sur une monture en plastique donnée sont usinées de façon à être légèrement plus grandes que la taille définie par le contour interne des cercles de la monture.

Par contre, les lentilles destinées à être montées sur des montures en métal sont usinées selon les mesures exactes du contour interne des cercles de cette monture.

La machine de détourage applique un « offset » dépendant du matériau de la monture.

On peut prévoir de proposer dans un appareil de lecture de forme de montures de lunettes, une saisie du matériau de la monture, par saisie dans une zone d'édition ou par sélection dans une liste. L'information est alors transmise à la machine de détourage par un logiciel réalisant l'interface entre l'appareil de lecture de forme et la machine de détourage.

Survient alors un inconvénient, car le temps nécessaire au montage des lentilles sur la monture est augmenté par le temps de saisie du matériau de la monture lors de l'étape de lecture de forme de la monture ou de détourage de la lentille.

De plus, si l'appareil de lecture de forme ne prend pas en compte le matériau, le temps de montage des montures en plastique est augmenté car l'acquisition du contour des cercles se fait par défaut à la vitesse la plus lente nécessaire à la lecture des montures en métal.

Enfin, le temps de montage des montures en plastique est éventuellement augmenté par l'acquisition inutile du profil du drageoir de la monture.

En outre, dans le cas de la saisie du matériau de la monture, une erreur éventuelle de saisie est répercutée sur l'ensemble des opérations de montage, et peut aboutir à l'usinage de lentilles inadaptées à la monture.

On connaît notamment des documents DE19727226 et US6006592 des procédés de fabrication d'une paire de lunettes. Selon ces documents, le matériau de la monture est déterminé par l'opérateur et cette information fait l'objet d'une saisie manuelle.

Un but de la présente invention est d'automatiser la saisie du matériau de la monture ou le choix d'un cycle de lecture de forme de la monture ou le choix d'un cycle de détourage des lentilles destinées à être montées sur une monture, par une détection automatique, ce qui simplifie l'utilisation de l'appareil de lecture de forme et de la machine de détourage en supprimant les différentes étapes de saisie du matériau ou de choix des cycles de lecture ou de détourage, et élimine de plus les erreurs éventuelles de saisie.

A cet effet, on propose selon l'invention un procédé de détection automatique du matériau d'une monture de lunettes de type cerclée tel que décrit dans la revendication 1.

Avantageusement alors, si la dimension axiale ou radiale d'une section du cercle ou d'un profil du drageoir est supérieure à ladite valeur seuil prédéterminée, la monture est en plastique, tandis que si la dimension axiale ou radiale d'une section du cercle ou d'un profil du drageoir est inférieure à ladite valeur seuil prédéterminée, la monture est en métal.

En effet, les cercles des montures en plastique ont des dimensions axiales et/ou radiales plus grandes que les cercles des montures en métal, ce qui permet de les distinguer.

Ainsi, grâce à l'invention, la saisie du matériau de la monture dans l'appareil de lecture de forme est supprimée. L'utilisation de l'appareil de lecture de forme en est facilitée, et les éventuelles erreurs de saisie sont éliminées.

On propose également, selon l'invention, un procédé de lecture de forme d'une monture de lunettes de type cerclée: tel que décrit dans la revendication 3.

L'automatisation du choix du cycle de lecture de la forme des montures facilite l'utilisation de l'appareil de lecture de forme et permet d'optimiser le temps de lecture des montures, en supprimant les étapes de saisie du matériau de la monture ou de choix du cycle de lecture de forme de la monture, et en rendant plus rapide la lecture des montures en plastique.

Avantageusement alors, si la dimension axiale ou radiale d'une section du cercle ou d'un profil du drageoir est supérieure à ladite valeur seuil prédéterminée, la lecture du brin longitudinal du drageoir de la monture est effectuée à une vitesse donnée dite rapide, tandis que si la dimension axiale ou radiale d'une section du cercle ou d'un profil du drageoir est inférieure à ladite valeur seuil prédéterminée, la lecture du brin longitudinal du drageoir de la monture est effectuée à une vitesse sensiblement plus lente que ladite vitesse rapide.

On propose aussi selon l'invention, un procédé de détourage tel que décrit dans la revendication 5.

Avantageusement alors, si la dimension axiale ou radiale d'une section du cercle ou d'un profil du drageoir est inférieure à ladite valeur seuil prédéterminée, chacune des lentilles est détourée suivant une première consigne de détourage, qui est déduite de la géométrie connue du contour interne des cercles de la monture et qui correspond à un premier contour externe de la lentille, tandis que si la dimension axiale ou radiale d'une section du cercle ou d'un profil du drageoir est supérieure à ladite valeur seuil prédéterminée, chacune des lentilles est détourée suivant une deuxième consigne de détourage qui est déduite de la géométrie connue du contour interne des cercles de la monture et qui correspond à un deuxième contour externe de la lentille légèrement plus grand que le premier contour externe de la lentille.

L'automatisation du choix du cycle de détourage des lentilles destinées à être montées sur une monture donnée facilite l'utilisation de la machine de détourage et diminue le temps de montage des lunettes en supprimant les étapes de saisie manuelle du matériau de la monture ou de l'«offset» à appliquer au contour externe de la lentille.

Selon une autre caractéristique avantageuse de l'invention, la dimension axiale ou radiale du cercle de la monture acquise correspond à l'épaisseur axiale dudit cercle.

Avantageusement alors, l'acquisition d'une dimension axiale ou radiale d'un cercle de la monture est réalisée grâce à un dispositif de mesure comportant
- des moyens de serrage pour le maintien de la monture, comprenant aux moins deux éléments de serrage axial d'un des cercles de la monture,
- des moyens de mesure de l'écartement de ces deux éléments de serrage axial, utilisés pour l'acquisition de l'épaisseur axiale de ce cercle.

L'écartement des éléments de serrage est représentatif de l'épaisseur axiale hors tout du cercle maintenu par les deux éléments de serrage axial et cet écartement peut être facilement et rapidement lu par un capteur du dispositif de mesure.

Selon une autre caractéristique avantageuse de l'invention, la dimension axiale ou radiale acquise du profil du drageoir du cercle de la monture correspond à la largeur d'ouverture axiale dudit drageoir.

Selon une autre caractéristique avantageuse de l'invention, l'acquisition d'une dimension axiale ou radiale d'une section du cercle de la monture ou du profil du drageoir de ce cercle est réalisée grâce à un appareil de lecture de forme de la monture comportant un palpeur adapté au palpage des drageoirs de la monture.

L'utilisation de l'appareil de lecture de forme est particulièrement avantageuse, puisqu'aucune manipulation de la monture n'est alors spécifiquement requise pour la détection du matériau.

En effet, au cours de la première étape du montage, la monture est placée dans l'appareil de lecture de forme et maintenue par des moyens de serrage pour l'acquisition du contour interne de la monture et, éventuellement, du profil de son drageoir. Ces moyens de serrage de la monture ou d'autres moyens de mesure de l'appareil de lecture de forme peuvent être facilement utilisés pour mesurer l'épaisseur axiale de la monture.

Avantageusement alors, l'acquisition d'une dimension axiale ou radiale d'une section d'un cercle de la monture comporte un palpage d'au moins un des éléments de serrage axial.

L'appareil de lecture de forme comporte un palpeur et des moyens d'actionnement de ce palpeur. Il comporte également des moyens de pilotage des moyens d'actionnement du palpeur, initialement conçus pour permettre l'acquisition du contour interne et du profil du drageoir de la monture. Le palpeur peut donc être actionné de façon à palper l'un des éléments de serrage axial pour déterminer l'écartement des éléments de serrage, représentatif de l'épaisseur axiale hors tout du cercle de la monture.

Selon une autre caractéristique avantageuse de l'invention, l'acquisition d'une dimension axiale ou radiale du cercle de la monture ou du drageoir de ce cercle comporte un palpage de tout ou partie d'un profil du cercle de la monture.

Selon une autre caractéristique avantageuse de l'invention, le procédé comporte une étape conditionnelle : si l'étape de comparaison de la dimension axiale ou radiale d'une section du cercle ou d'un profil du drageoir avec une valeur seuil prédéterminée montre que ladite dimension axiale ou radiale du cercle ou du drageoir se situe dans un intervalle d'incertitude autour de ladite valeur seuil, il est prévu l'émission d'un signal d'alerte et la validation manuelle du matériau de la monture, et/ou du choix du cycle de lecture de la monture et/ou du cycle de détourage des lentilles destinées à être montées sur ladite monture.

Une imprécision existe sur la mesure de la dimension axiale du cercle ou du drageoir de la monture. Si celle-ci est trop proche de la valeur seuil prédéterminée, la détection automatique du matériau n'est pas fiable et le dispositif de mesure émet un signal d'alerte pour que le matériau détecté et/ou le choix du cycle de lecture de la monture et/ou le choix du cycle de détourage des lentilles destinées à être montées sur ladite monture soient confirmés manuellement par l'opticien.

La description qui va suivre, en regard des dessins annexés, donnée à titre d'exemple non limitatif, fera bien comprendre en quoi consiste l'invention et comment elle peut être réalisée.

Sur les dessins indexés :
- la figure 1 est une vue schématique en perspective d'un appareil de lecture de forme accueillant une monture de lunettes ;
- la figure 2 est une vue schématique en coupe d'un cercle de la monture de lunettes de la figure 1 maintenu par des moyens de serrage de l'appareil de lecture de forme de la figure 1, selon un premier mode de réalisation de l'invention;
- la figure 3 est une vue schématique en coupe d'un cercle de la monture de lunettes de la figure 1 maintenu par des moyens de serrage de l'appareil de lecture de forme de la figure 1, selon une variante du premier mode de réalisation de l'invention représenté sur la figure 2 ;
- la figure 4 est une vue schématique en plan du contour interne d'un cercle de monture de lunettes tel que mesuré par l'appareil de lecture de forme de la figure 1 ;

Le procédé selon l'invention est avantageusement mis en oeuvre grâce à un appareil de lecture de forme, ce qui permet d'éviter l'utilisation d'un dispositif de mesure distinct. L'appareil de lecture de forme est un moyen bien connu de l'homme du métier et ne fait pas en propre l'objet de l'invention décrite. Il est par exemple possible d'utiliser un appareil de lecture de forme tel que décrit dans le brevet EP 0 750 172 ou commercialisé par Essilor International sous la marque Kappa ou sous la marque Kappa CT.

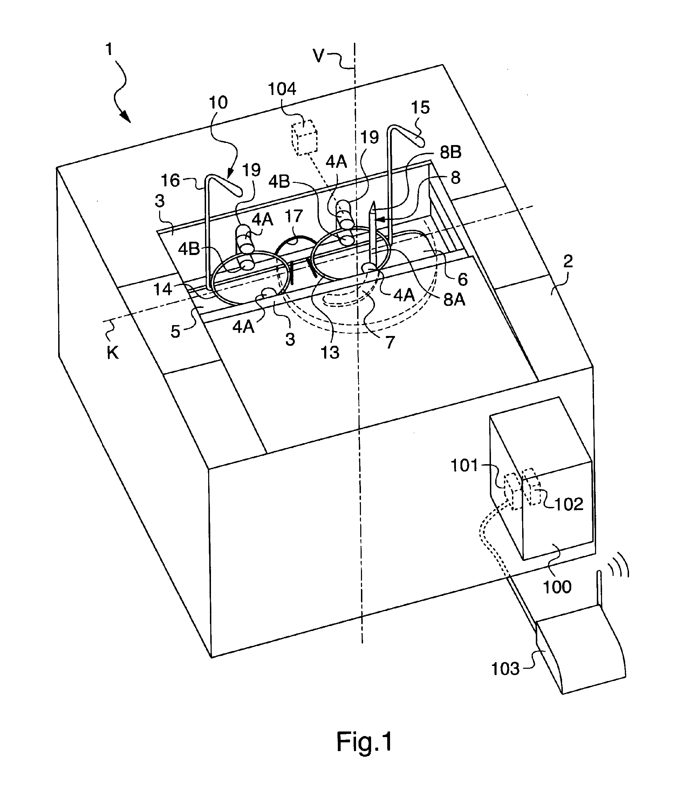

La figure 1 est une vue générale de cet appareil de lecture de forme 1, tel qu'il se présente à son utilisateur. Cet appareil comporte un capot supérieur 2 recouvrant l'ensemble de l'appareil à l'exception d'une portion supérieure centrale.

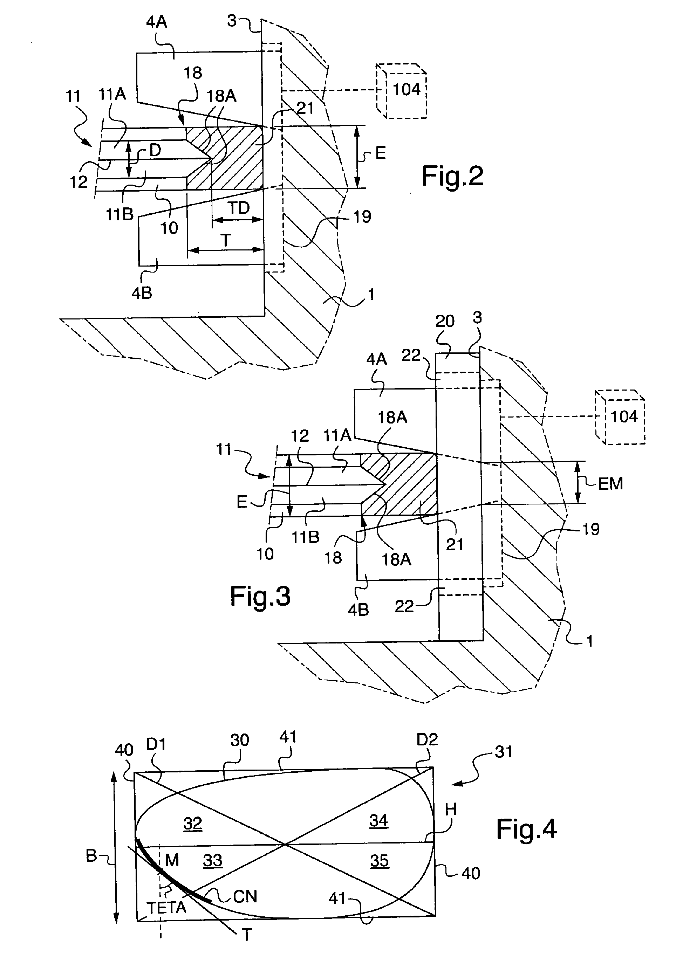

L'appareil de lecture de forme 1 est destiné à relever la forme des drageoirs 11, visibles sur la figure 2, d'une monture 10 de lunettes choisie par un porteur.

La monture 10 de lunettes choisie est ici de type cerclée. Elle comporte deux cercles 13, 14, à savoir un cercle droit 13 et un cercle gauche 14, destinés à être respectivement positionnés en regard de l'oeil droit et de l'oeil gauche du porteur lorsque ce dernier porte ladite monture, ainsi qu'un pontet 17 liant les deux cercles 13, 14 et deux branches 15, 16 liées chacune à l'un des cercles 13, 14.

La direction axiale relative aux cercles 13, 14 de cette monture 10 est définie comme la direction perpendiculaire au plan moyen de ces cercles.

La direction radiale relative à un point d'un cercle 13, 14 de cette monture 10 est définie comme la direction perpendiculaire à la tangente à ce cercle 13, 14 en ce point, dans le plan moyen de ces cercles.

La direction transversale relative aux cercles 13, 14 de cette monture 10 est définie comme la direction perpendiculaire à l'axe reliant les extrémités des branches 15, 16 liées aux cercles 13, 14, dans le plan moyen de ces cercles.

Les deux cercles 13, 14 présentent chacun une rainure intérieure communément appelée drageoir 11 ayant une forme de profilé de section uniforme, dont le fond forme un brin longitudinal particulier définissant le contour interne 12 de la monture, visible sur la figure 2.

La coupe d'un cercle 13, 14 selon une direction radiale définit une section 21 du cercle 13,14. Le profil 18 d'un cercle 13, 14, représente une partie du pourtour de la section 21 du cercle 13, 14, comprise entre les points axialement les plus éloignés sur le pourtour de cette section 21. Le profil 18 A du drageoir représente la partie du profil 18 du cercle 13, 14 délimitée par le drageoir, comme visible sur la figure 2.

Chacun des cercles 13, 14 de la monture 10 de lunettes choisie est adapté à accueillir une lentille (non représentée) pourvue sur sa tranche d'une nervure d'emboîtement, appelée biseau, destinée à s'emboîter dans le drageoir 11 du cercle correspondant.

L'appareil de lecture de forme 1 représenté sur la figure 1 comporte un jeu de deux mâchoires 3 de serrage transversal dont l'une au moins est mobile par rapport à l'autre de sorte que les mâchoires 3 peuvent être rapprochées ou écartées l'une de l'autre afin de pincer les cercles 13, 14 de la monture 10 selon une direction transversale.

Chacune des mâchoires 3 est de plus munie de deux pinces de serrage axial formées chacune de deux doigts coniques de serrage 4A, 4B appelés pions coniques, adaptés à serrer entre eux selon une direction axiale chaque cercle 13, 14 de la monture 10 de lunettes choisie afin de l'immobiliser.

Dans le cas d'une monture de cotes standard, la monture 10 est insérée entre les pions coniques 4A, 4B des mâchoires 3 de sorte que le bord extérieur de la monture 10 soit en contact avec les mâchoires 3, comme cela est représenté sur la figure 2. L'écartement des pions coniques 4A et 4B est alors représentatif de l'épaisseur axiale E hors tout des cercles 13, 14 de la monture.

En l'espèce, le pion conique inférieur 4B situé sous la monture 10 de lunettes est fixe, tandis que le pion conique supérieur 4A situé au dessus de la monture 10 de lunettes est mobile en translation, ici le long d'une glissière 19, représentée sur la figure 1. Il est évidemment possible d'utiliser un lecteur dans lequel les deux pions coniques sont mobiles en translation.

Au moins l'un des pions coniques supérieurs 4A est relié à un capteur 104 permettant de déterminer sa hauteur par rapport au pion conique 4B situé en dessous. La hauteur initiale du pion conique supérieur 4A, correspondant à une position où il est en contact avec le pion conique inférieur 4B, est connue.

Un châssis 5 est situé dans l'espace laissé visible par l'ouverture supérieure centrale du capot 2. Une platine (non visible) peut se déplacer en translation sur ce châssis 5 selon un axe de transfert K. Sur cette platine est monté un plateau tournant 6 qui possède un axe de rotation V défini comme l'axe normal à la face avant de ce plateau tournant 6 et passant par son centre. Il est adapté à pivoter par rapport à la platine.

Le plateau tournant 6 comporte une lumière 7 oblongue en forme d'arc de cercle à travers laquelle saille un palpeur 8 comportant une tige support 8A et, à son extrémité libre, un doigt de palpage 8B destiné à suivre par glissement ou éventuellement roulement le contour interne 12 ou le profil 18A, visible sur la figure 2, des drageoirs 11 de la monture 10 de lunettes choisie.

L'appareil de lecture de forme 1 comporte des moyens d'actionnement (non représentés) adaptés, d'une part, à faire glisser la tige support 8A le long de la lumière 7 afin de l'éloigner ou de la rapprocher du centre du plateau tournant 6, et, d'autre part, à positionner le doigt de palpage 8B du palpeur 8 à une altitude plus ou moins importante par rapport au plan de la face avant du plateau tournant 6.

L'appareil de lecture de forme 1 comporte des moyens de pilotage 102 des moyens d'actionnement de l'appareil, destinés à piloter la position de l'extrémité du doigt de palpage 8B du palpeur 8.

Il comporte également des moyens d'acquisition 101 des informations du capteur 104 permettant l'acquisition de la hauteur du pion conique 4A, et de la position de l'extrémité du doigt de palpage 8B du palpeur 8 qui est utilisé pour lire la forme du drageoir 11.

L'ensemble des moyens d'acquisition 101 et de pilotage 102 est intégré dans une unité centrale informatique 100 permettant, d'une part, d'actionner les moyens d'actionnement de l'appareil, et, d'autre part, de récupérer et d'enregistrer les données que lui transmettent des capteurs intégrés à l'appareil de lecture de forme 1.

Cette unité centrale informatique 100 est également programmée pour réaliser le calcul de l'écartement des pions coniques et la comparaison de cette valeur représentant l'épaisseur axiale E de la monture 10 de lunettes avec une valeur seuil prédéterminée. Celle-ci est par exemple prédéterminée grâce à un échantillon de montures du marché et vaut ici 3,4 millimètres.

L'unité centrale informatique 100 est en outre reliée à des moyens de communication 103, ici sans fil. Ces moyens de communication 103 sont adaptés à communiquer avec une machine de détourage de lentilles (non représentée) pour lui transmettre les résultats des opérations de détection du matériau de la monture 10 et de lecture des formes des drageoirs 11.

Si l'épaisseur axiale E de la monture 10 est inférieure à la valeur seuil prédéterminée :
- la monture 10 de lunettes est en métal,
- l'appareil de lecture de forme 1 procède alors à la lecture précise, et donc lente, du contour interne 12 des cercles 13, 14 de la monture 10 et à l'acquisition du profil 18A du drageoir 11,
- la machine de détourage usine alors chaque lentille destinée à être montée sur cette monture 10 selon une première consigne de détourage correspondant à un contour externe de la lentille proche du contour interne 12 de chaque cercle 13, 14 de la monture 10.

Si l'épaisseur axiale E de la monture 10 est supérieure à la valeur seuil prédéterminée :
- la monture 10 de lunettes est en plastique,
- l'appareil de lecture de forme 1 procède alors à une lecture plus rapide que pour les montures métalliques du contour interne 12 des cercles 13, 14 de la monture 10 et ne réalise pas l'acquisition du profil 18A du drageoir 11,
- la machine de détourage usine alors chaque lentille destinée à être montée sur cette monture 10 selon une deuxième consigne de détourage correspondant à un contour externe de la lentille légèrement plus grand que le contour interne 12 de chaque cercle 13, 14 de la monture 10.

La machine de détourage ajoute, pour le détourage des lentilles destinées à être montées sur des montures en plastique, un « offset » en diamètre compris entre 0,05 et 0,2 millimètre, et qui vaut typiquement 0,1 millimètre.

Le temps de lecture du contour interne 12 complet de chaque cercle d'une monture en plastique à la vitesse de lecture dite rapide est compris entre 5 et 12 secondes, et il est typiquement de 6 secondes.

Le temps de lecture du contour interne 12 complet de chaque cercle d'une monture en métal à la vitesse de lecture dite lente est compris entre 9 et 13 secondes, et il est typiquement de 12 secondes.

La lecture d'une monture en plastique est alors plus rapide que la lecture d'une monture en métal. La lecture du contour de chaque cercle d'une monture en plastique (faite à vitesse rapide) est accélérée d'environ 6 secondes par rapport à une lecture (faite à vitesse lente) de chaque cercle d'une monture en métal. De plus, l'acquisition du profil du drageoir n'est pas réalisée, ce qui réduit encore le temps de lecture d'environ 5 secondes. On obtient ainsi un gain de 17 secondes au total.

Si l'épaisseur axiale E de la monture se trouve dans un intervalle d'incertitude autour de la valeur seuil, un signal d'alerte est émis et une confirmation manuelle du matériau de la monture et/ou du cycle de lecture de forme de la monture et/ou du cycle de détourage des lentilles associées est demandée. Ici, l'intervalle d'incertitude est compris entre 3,2 et 3,6 millimètres. Cette étape est nécessaire pour 5 à 10% des montures.

Alternativement, on peut aussi prévoir qu'après un délai appelé « time-out » après l'émission du signal d'alerte, l'appareil de lecture de forme 1 réalise la lecture du contour interne 12 et du drageoir 11 des cercles 13, 14 de la monture à la vitesse dite lente adaptée aux montures métalliques, sans attendre la validation manuelle du matériau, et/ou du cycle de lecture de forme de la monture.

Selon un premier mode de réalisation de l'invention, représenté sur la figure 2, la hauteur finale du pion conique 4A, c'est-à-dire la hauteur du pion conique 4A après serrage des cercles 13, 14 de la monture 10, est enregistrée au moyen du capteur 104.

L'unité centrale informatique 100 est programmée pour soustraire la hauteur initiale connue du pion conique 4A à sa hauteur finale et ainsi déterminer l'écartement entre les deux pions coniques 4A et 4B, et donc l'épaisseur axiale des cercles 13, 14 de la monture 10.

Selon un deuxième mode de réalisation, l'appareil de lecture 1 décrit précédemment ne comporte pas de capteur 104 permettant l'acquisition de la hauteur d'un des pions coniques supérieurs 4A.

L'unité centrale informatique 100 est programmée de façon à contrôler le dispositif de pilotage 102 des moyens d'actionnement du palpeur 8 pour que celui-ci palpe l'un des pions coniques supérieurs 4A.

L'unité centrale informatique 100 est également programmée pour déduire du palpage de ce pion conique supérieur 4A la hauteur finale de celui-ci, et soustraire la hauteur initiale connue du pion conique 4A à sa hauteur finale. L'unité centrale informatique 100 détermine ainsi l'écartement entre les deux pions coniques 4A et 4B, et donc l'épaisseur axiale des cercles 13, 14 de la monture 10.

Selon une variante des deux modes de réalisation décrits précédemment, la monture 10 possède une dimension transversale appelée cote B inférieure à une cote B seuil.

En référence à la figure 4, un rectangle 31 dit de « boxing » correspond au rectangle dans lequel s'inscrit le contour projeté 30 correspondant à la projection du contour interne 12 du cercle 13, 14 de la monture 10 dans le plan moyen de ce cercle 13, 14. La cote B est, en générale, la largeur du plus petit côté de ce rectangle 31.

Si la cote B d'une monture 10 est inférieure à une cote B seuil, l'insertion de cette monture 10 dans l'appareil de lecture de forme 1 de la figure 1 nécessite un rapprochement des mâchoires 3 tel que le mouvement du palpeur 8 est gêné par la proximité relative des pions coniques 4A, 4B en vis-à-vis sur les mâchoires 3.

La cote B seuil dépend donc des caractéristiques géométriques de l'appareil de lecture de forme 1.

Il est alors prévu, comme représenté sur la figure 3, d'utiliser des cales 20 se présentant sous la forme de plaques possédant des ouvertures 22 adaptées à un plaquage contre les mâchoires 3, autour des pions coniques 4A, 4B. Ainsi, la monture 10 est insérée entre les pions coniques 4A, 4B des mâchoires 3 de sorte que le bord extérieur de la monture 10 soit en contact avec les cales 20 plaquées contre les mâchoires 3.

L'utilisation des cales 20 introduit une erreur systématique d'environ un demi-millimètre en moins sur la hauteur finale du pion conique supérieur 4A mesurée.

Selon la variante des deux premiers modes de réalisation décrits, dans le cas d'une monture de petite cote B, l'unité centrale informatique 100 est programmée pour calculer la différence EM entre la hauteur finale et la hauteur initiale du pion conique supérieur 4A et lui ajouter un demi-millimètre de correction en raison de la présence des cales 20, afin de déterminer précisément l'épaisseur axiale E des cercles de la monture.

La distinction entre les montures de cotes standard et les montures de petites cotes B peut se faire de différentes façons.

On peut envisager par exemple une saisie manuelle indiquant à l'unité centrale informatique 100 la présence ou non des cales 20. On peut également automatiser la détection d'une monture de petite cote B en plaçant un capteur permettant d'enregistrer la présence ou l'absence de ces cales 20.

L'unité centrale informatique 100 peut également être programmée pour déterminer la valeur de la cote B de la monture 10 après l'acquisition du contour interne 12 des cercles 13, 14 de la monture 10 et comparer cette cote B à une cote B seuil prédéterminée à partir des caractéristiques du lecteur, de telle sorte que les montures dont la cote B est inférieure à cette cote B seuil nécessite l'utilisation des cales 20.

Selon un troisième mode de réalisation, l'appareil de lecture 1 décrit précédemment ne comporte pas de capteur 104 permettant l'acquisition de la hauteur d'un des pions coniques supérieurs 4A.

L'épaisseur axiale E hors tout des cercles 13, 14 de la monture 10 est déduite du palpage d'au moins un profil 18 complet d'un cercle 13, 14 de la monture 10.

Pour cela, l'unité centrale informatique est programmée pour que les moyens d'actionnement du palpeur 8 positionne initialement celui-ci contre le profil 18 d'un cercle 13, 14 de la monture 10, et le fasse glisser le long de ce profil 18. L'unité centrale informatique 100 relève alors l'épaisseur axiale E du cercle 13, 14 qui est égale à la largeur totale du profil 18 palpé.

Selon un quatrième mode de réalisation, l'appareil de lecture 1 décrit précédemment ne comporte pas de capteur 104 permettant l'acquisition de la hauteur d'un des pions coniques supérieurs 4A.

La largeur d'ouverture D axiale du drageoir 11, représenté sur la figure 2, d'un cercle 13,14 est déduite du palpage d'au moins une partie du profil 18 de ce cercle.

Pour cela, l'unité centrale informatique est programmée pour que les moyens d'actionnement du palpeur 8 positionne initialement celui-ci contre le profil 18A du drageoir 11 d'un cercle 13, 14 de la monture 10, et le fasse glisser le long de chaque flanc 11A, 11B de ce drageoir 11. L'unité centrale informatique 100 relève alors la largeur d'ouverture D axiale du drageoir 11 (généralement comprise entre 1 et 2,5 millimètres) du cercle 13, 14 .

L'unité centrale informatique 100 est alors programmée pour déduire l'épaisseur axiale E hors tout de la monture 10 de la largeur d'ouverture D axiale du drageoir 11.

De manière alternative, l'unité centrale informatique 100 peut être programmée pour comparer directement, selon le même procédé que celui décrit précédemment, la largeur d'ouverture D axiale du drageoir 11 à une valeur seuil prédéterminée à partir d'un échantillon de montures du marché.

Selon ces troisième et quatrième modes de réalisation, il n'est pas nécessaire de distinguer les montures à petite cote B des montures de cotes standard, car l'acquisition du profil 18 du cercle 13 ,14 ou du profil 18A du drageoir 11 n'est pas affectée par la présence des cales 20.

En variante du quatrième mode de réalisation, l'épaisseur radiale d'un cercle 13, 14 de la monture 10 en fond de drageoir TD ou l'épaisseur radiale T d'un cercle 13,14 de la monture 10 peut être déduite du palpage d'au moins une partie du profil 18 de ce cercle et comparée à une valeur seuil prédéterminée à partir d'un échantillon de montures du marché.

On peut noter qu'il est également possible d'automatiser la détection de certaines caractéristiques des lentilles grâce à la lecture du contour des lentilles par un appareil de lecture de forme des lentilles. Il est possible par exemple de distinguer automatiquement une lentille droite d'une lentille gauche.

La distinction entre lentille droite et lentille gauche est en effet généralement réalisée manuellement lors de la lecture du contour externe de la lentille.

Cependant, connaissant le contour externe d'une lentille, l'unité centrale informatique 100 peut être programmée pour déterminer automatiquement s'il s'agit d'une lentille droite ou d'une lentille gauche.

Sur la figure 4 est représenté un contour projeté 30 correspondant à la projection dans le plan moyen de la lentille du contour externe de celle-ci. Le rectangle 31 est le rectangle de « boxing » défini précédemment, qui est connu de l'homme du métier. Ce rectangle 31 comporte deux petits côtés 40 et deux grands côtés 41.

Les diagonales D1, D2 du rectangle 31 et la droite H passant par les milieux des petits côtés 40 de ce rectangle 31 divisent la surface intérieure du rectangle 31 en six zones.

Pour une paire de lentilles destinées à être montées sur une monture non symétrique, une différence majeure entre la lentille droite et la lentille gauche est la position du côté nasal CN, situé du côté de la monture destiné à reposer sur le nez du porteur.

Ce côté nasal CN est grossièrement circonscrit par l'une des quatre zones latérales 32 à 35 définies par les diagonales D1, D2 et la droite H. Les lentilles sont toujours insérées dans l'appareil de lecture de forme des lentilles de telle sorte que le côté nasal CN se trouve dans l'une des deux zones latérales basses 33 ou 35. Sur la figure 4, le côté nasal CN est situé dans la zone latérale basse 33.

Ce côté nasal CN se distingue, en générale, par une inclinaison plus forte du contour projeté 30 par rapport aux petits côtés 40 du rectangle 31 dans la zone latérale correspondante, car la monture s'écarte de chaque côté du nez du porteur au niveau du côté nasal. Il est donc possible de déterminer laquelle des deux zones latérales basses 33, 35 accueille le côté nasal CN du contour projeté 30 en comparant l'inclinaison du contour projeté 30 dans ces deux zones.

Pour cela, on mesure, pour chaque point M du contour projeté 30 appartenant à l'une de ces zones latérales basses 33, 35, l'angle TETA défini par la tangente T au contour projeté 30 en ce point M et une droite parallèle aux petits côtés 40 du rectangle 31 passant par ce point. On calcule ensuite la moyenne de ces angles TETA pour chaque zone latérale basse 33, 35.

Le contour externe de la lentille étant mesuré avec la face avant de celle-ci vers le haut et le côté nasal CN vers le bas, si la zone latérale dont l'angle moyen est le plus grand est située en bas à gauche du rectangle 31 (zone 33), il s'agit de la lentille gauche, et si la zone latérale dont l'angle moyen est le plus grand est située en bas à droite du rectangle 31 (zone 35), il s'agit de la lentille droite.

Si la différence entre les moyennes des angles TETA des deux zones latérales basses 33, 35 est inférieure à une valeur seuil, on peut prévoir l'émission d'un signal d'alerte et une validation manuelle du positionnement droit ou gauche de la lentille sur la monture en conditions de porté.

La présente invention n'est nullement limitée aux modes de réalisation décrits et représentés.

Il est possible par exemple de combiner les mesures de plusieurs dimensions caractéristiques de la monture, ou bien de mesurer d'autres dimensions caractéristiques de la monture que celles décrites ici.

Il est aussi possible par exemple de combiner la mesure d'une dimension caractéristique de la monture comme l'épaisseur axiale E du cercle de la monture, avec d'autres informations sur la monture, comme par exemple la forme de la base de la monture. En effet, les montures à forte base sont généralement des montures en plastique. Une telle combinaison peut être notamment mise à profit dans la zone d'incertitude autour de la valeur seuil prédéterminée afin de déterminer le matériau de la monture sans recourir à une validation manuelle.

## Revendications

1. Procédé de détection automatique du matériau d'une monture (10) de lunettes de type cerclée comprenant les étapes suivantes de :
- acquisition d'une dimension axiale ou radiale d'une section (21) d'un cercle (13, 14) de la monture (10) ou d'une dimension axiale ou radiale d'un profil (18A) d'un drageoir (11) de ce cercle (13, 14) ;
- comparaison de cette dimension axiale ou radiale d'une section (21) du cercle (13, 14) ou d'un profil (18A) du drageoir (11) avec une valeur seuil prédéterminée;
- détermination du matériau de la monture (10) en fonction de cette comparaison.

2. Procédé de détection automatique du matériau d'une monture (10) de lunettes selon la revendication précédente, dans lequel, si la dimension axiale ou radiale d'une section (21) du cercle (13, 14) ou d'un profil (18A) du drageoir (11) est supérieure à ladite valeur seuil prédéterminée, la monture est en plastique, tandis que si la dimension axiale ou radiale d'une section (21) du cercle (13, 14) ou d'un profil (18A) du drageoir (11) est inférieure à ladite valeur seuil prédéterminée, la monture est en métal.

3. Procédé de lecture de forme d'une monture (10) de lunettes de type cerclée en fonction du matériau de la monture, comprenant les étapes suivantes de:
- acquisition d'une dimension axiale ou radiale d'une section (21) d'un cercle (13, 14) de la monture (10) ou d'une dimension axiale ou radiale d'un profil (18A) d'un drageoir (11) de ce cercle (13, 14) ;
- comparaison de cette dimension axiale ou radiale d'une section (21) du cercle (13, 14) ou d'un profil (18A) du drageoir (11) avec une valeur seuil prédéterminée, de manière à déterminer le matériau de la monture;
- lecture de forme de la monture (10) selon un cycle de lecture calculé en fonction de cette comparaison, de manière à tenir compte du matériau de la monture : si la dimension axiale ou radiale de la section (21) du cercle (13, 14) ou du profil (18A) du drageoir (11) est inférieure à ladite valeur seuil prédéterminée, ledit cycle de lecture de forme de la monture (10) comprend une étape d'acquisition de la géométrie du profil (18A) du drageoir (11) et si cette dimension axiale ou radiale de la section (21) du cercle (13, 14) ou du profil (18A) du drageoir (11) est supérieure à ladite valeur seuil prédéterminée, ledit cycle de lecture de forme de la monture (10) ne comprend pas d'étape d'acquisition de la géométrie du profil (18A) du drageoir (11).

4. Procédé de lecture de forme d'une monture (10) de lunettes de type cerclée selon la revendication précédente, dans lequel, si la dimension axiale ou radiale d'une section (21) du cercle (13, 14) ou d'un profil (18A) du drageoir (11) est supérieure à ladite valeur seuil prédéterminée, la lecture du brin longitudinal (12) du drageoir (11) de la monture est effectuée à une vitesse donnée dite rapide, tandis que si la dimension axiale ou radiale d'une section (21) du cercle (13, 14) ou d'un profil (18A) du drageoir (11) est inférieure à ladite valeur seuil prédéterminée, la lecture du brin longitudinal (12) du drageoir (11) de la monture est effectuée à une vitesse sensiblement plus lente que ladite vitesse rapide.

5. Procédé de détourage d'une lentille destinée à être montée sur une monture (10) de lunettes de type cerclée donnée, dont le contour interne (12) des cercles (13, 14) présente une géométrie connue, en fonction du matériau de cette monture, comprenant les étapes suivantes de :
- acquisition d'une dimension axiale ou radiale d'une section (21) d'un cercle (13, 14) de la monture (10) ou d'une dimension axiale ou radiale d'un profil (18A) d'un drageoir (11) de ce cercle (13, 14) ;
- comparaison de cette dimension axiale ou radiale du cercle (13, 14) ou du drageoir (11) avec une valeur seuil prédéterminée, de manière à déterminer le matériau de la monture ;
- détourage de la lentille destinée à être montée sur ladite monture (10) selon un cycle de détourage calculé en fonction de cette comparaison de manière à tenir compte du matériau de la monture.

6. Procédé de détourage selon la revendication précédente, dans lequel, si la dimension axiale ou radiale d'une section (21) du cercle (13, 14) ou d'un profil (18A) du drageoir (11) est inférieure à ladite valeur seuil prédéterminée, chacune des lentilles est détourée suivant une première consigne de détourage, qui est déduite de la géométrie connue du contour interne (12) des cercles (13, 14) de la monture (10) et qui correspond à un premier contour externe de la lentille, tandis que, si la dimension axiale ou radiale d'une section (21) du cercle (13, 14) ou d'un profil (18A) du drageoir (11) est supérieure à ladite valeur seuil prédéterminée, chacune des lentilles est détourée suivant une deuxième consigne de détourage, qui est déduite de la géométrie connue du contour interne (12) des cercles (13, 14) de la monture (10) et qui correspond à un deuxième contour externe de la lentille légèrement plus grand que le premier contour externe de la lentille.

7. Procédé selon l'une des revendications précédentes, dans lequel ladite dimension axiale ou radiale d'une section (21) du cercle (13, 14) de la monture (10) acquise correspond à l'épaisseur axiale (E) dudit cercle (13, 14).

8. Procédé selon la revendication précédente, dans lequel l'acquisition de l'épaisseur axiale d'un cercle (13, 14) de la monture (10) est réalisée grâce à un dispositif de mesure comportant
- des moyens de serrage pour le maintien de la monture, comprenant aux moins deux éléments de serrage axial (4A, 4B) d'un des cercles (13, 14) de la monture (10),
- des moyens de mesure de l'écartement de ces deux éléments de serrage axial (4A, 4B), utilisés pour l'acquisition de l'épaisseur axiale (E) de ce cercle (13, 14).

9. Procédé selon l'une des revendications 1 à 6, dans lequel la dimension axiale ou radiale du drageoir (11) d'un cercle (13, 14) de la monture (10) acquise correspond à la largeur d'ouverture (D) axiale dudit drageoir (11).

10. Procédé selon l'une des revendications précédentes, dans lequel l'acquisition d'une dimension axiale ou radiale d'une section (21) d'un cercle (13, 14) de la monture (10) ou d'une dimension axiale ou radiale du profil (18A) du drageoir (11) de ce cercle est réalisée grâce à un appareil de lecture de forme (1) de la monture (10) comportant un palpeur (8) adapté au palpage des drageoirs (11) de la monture (10).

11. Procédé selon les revendications 8 et 10, dans lequel l'acquisition d'une dimension axiale d'un cercle (13, 14) de la monture (10) comporte un palpage d'au moins un des éléments de serrage axial (4A).

12. Procédé selon la revendication 10, dans lequel l'acquisition d'une dimension axiale ou radiale d'une section (21) d'un cercle (13, 14) de la monture (10) ou d'une dimension axiale ou radiale d'un profil du drageoir (11) de ce cercle comporte un palpage de tout ou partie d'un profil (18) de ce cercle (13, 14) de la monture (10).

## Patentansprüche

1. Verfahren zum automatischen Erkennen des Materials eines Brillengestells (10) von der Art mit Rand, umfassend folgende Schritte:
- Erfassen einer axialen oder radialen Abmessung eines Abschnitts (21) eines Randes (13, 14) des Gestells (10) öder einer axialen oder radialen Abmessung eines Profils (18A) einer Fassung (11) dieses Randes (13, 14);
- Vergleichen dieser axialen oder radialen Abmessung eines Abschnitts (21) des Randes (13, 14) oder eines Profils (18A) der Fassung (11) mit einem vorbestimmten Schwellenwert;
- Bestimmen des Materials des Gestells (10) in Abhängigkeit von diesem Vergleich.

2. Verfahren zum automatischen Erkennen des Materials eines Brillengestells (10) nach dem vorhergehenden Anspruch, wobei, wenn die axiale oder radiale Abmessung eines Abschnitts (21) des Randes (13, 14) oder eines Profils (18A) der Fassung (11) größer als der vorbestimmte Schwellenwert ist, das Gestell aus Kunststoff besteht, wohingegen, falls die axiale oder radiale Abmessung eines Abschnitts (21) des Randes (13, 14) oder eines Profils (18A) der Fassung (11) kleiner als der vorbestimmte Schwellenwert ist, das Gestell aus Metall besteht.

3. Verfahren zum Ablesen der Form eines Brillengestells (10) von der Art mit Rand in Abhängigkeit von dem Material des Gestells, umfassend folgende Schritte:
- Erfassen einer axialen oder radialen Abmessung eines Abschnitts (21) eines Randes (13, 14) des Gestells (10) oder einer axialen oder radialen Abmessung eines Profils (18A) einer Fassung (11) dieses Randes (13, 14);
- Vergleichen dieser axialen oder radialen Abmessung eines Abschnitts (21) des Randes (13, 14) oder eines Profils (18A) der Fassung (11) mit einem vorbestimmten Schwellenwert, um das Material des Gestells zu bestimmen;
- Ablesen der Form des Gestells (10) gemäß einem Lesezyklus, der in Abhängigkeit von diesem Vergleich berechnet wird, um das Material des Gestells zu berücksichtigen: falls die axiale oder radiale Abmessung des Abschnitts (21) des Randes (13, 14) oder des Profils (18A) der Fassung (11) kleiner als der vorbestimmte Schwellenwert ist, umfasst der Zyklus des Ablesens der Form des Gestells (10) einen Schritt des Erfassens der Geometrie des Profils (18A) der Fassung (11), und falls diese axiale oder radiale Abmessung des Abschnitts (21) des Randes (13, 14) oder des Profils (18A) der Fassung (11) größer als der vorbestimmte Schwellenwert ist, umfasst der Zyklus des Ablesens der Form des Gestells (10) keinen Schritt des Erfassens der Geometrie des Profils (18A) der Fassung (11).

4. Verfahren zum Ablesen der Form eines Brillengestells (10) von der Art mit Rand nach dem vorhergehenden Anspruch, wobei, falls die axiale oder radiale Abmessung eines Abschnitts (21) des Randes (13, 14) oder eines Profils (18A) der Fassung (11) größer als der vorbestimmte Schwellenwert ist, das Ablesen des Längsstücks (12) der Fassung (11) des Gestells auf einer gegebenen so genannten schnellen Geschwindigkeit erfolgt, wohingegen, falls die axiale oder radiale Abmessung eines Abschnitts (21) des Randes (13, 14) oder eines Profils (18A) der Fassung (11) kleiner als der vorbestimmte Schwellenwert ist, das Ablesen des Längsstücks (12) der Fassung (11) des Gestells auf einer Geschwindigkeit erfolgt, die wesentlich langsamer als die schnelle Geschwindigkeit ist.

5. Verfahren zum Zuschneiden einer Linse, die bestimmt ist, in einem gegebenen Brillengestell (10) von der Art mit Rand montiert zu werden, dessen Innenkontur (12) der Ränder (13, 14) eine bekannte Geometrie aufweist, in Abhängigkeit von dem Material dieses Gestells, umfassend folgende Schritte:
- Erfassen einer axialen oder radialen Abmessung eines Abschnitts (21) eines Randes (13, 14) des Gestells (10) oder einer axialen oder radialen Abmessung eines Profils (18A) einer Fassung (11) dieses Randes (13, 14);
- Vergleichen dieser axialen oder radialen Abmessung des Randes (13, 14) oder der Fassung (11) mit einem vorbestimmten Schwellenwert, um das Material des Gestells zu bestimmen;
- Zuschneiden der Linse, die bestimmt ist, in dem Gestell (10) montiert zu werden, gemäß einem Zuschneidezyklus, der in Abhängigkeit von diesem Vergleich berechnet wird, um das Material des Gestells zu berücksichtigen.

6. Zuschneideverfahren nach dem vorhergehenden Anspruch, wobei, falls die axiale oder radiale Abmessung eines Abschnitts (21) des Randes (13, 14) oder eines Profils (18A) der Fassung (11) kleiner als der vorbestimmte Schwellenwert ist, jede der Linsen gemäß einem ersten Zuschneideeinstellwert zugeschnitten wird, der aus der bekannten Geometrie der Innenkontur (12) der Ränder (13, 14) des Gestells (10) abgeleitet wird und der einer ersten Außenkontur der Linse entspricht, wohingegen, falls die axiale oder radiale Abmessung eines Abschnitts (21) des Randes (13, 14) oder eines Profils (18A) der Fassung (11) größer als der vorbestimmte Schwellenwert ist, jede der Linsen gemäß einem zweiten Zuschneideeinstellwert zugeschnitten wird, der aus der bekannten Geometrie der Innenkontur (12) der Ränder (13, 14) des Gestells (10) abgeleitet wird und der einer zweiten Außenkontur der Linse entspricht, die etwas größer als die erste Außenkontur der Linse ist.

7. Verfahren nach einem der vorhergehenden Ansprüche, wobei die axiale oder radiale Abmessung eines Abschnitts (21) des Randes (13, 14) des erfassten Gestells (10) der axialen Dicke (E) des Randes (13, 14) entspricht.

8. Verfahren nach dem vorhergehenden Anspruch, wobei die Erfassung der axialen Dicke eines Randes (13, 14) des Gestells (10) dank einer Messvorrichtung ausgeführt wird, die Folgendes umfasst:
- Einspannmittel zum Festhalten des Gestells, die mindestens zwei Elemente (4A, 4B) zum axialen Einspannen eines der Ränder (13, 14) des Gestells (10) umfassen,
- Mittel zum Messen der Beabstandung dieser beiden axialen Einspannelemente (4A, 4B), die zum Erfassen der axialen Dicke (E) dieses Randes (13, 14) verwendet werden.

9. Verfahren nach einem der Ansprüche 1 bis 6, wobei die axiale oder radiale Abmessung der Fassung (11) eines Randes (13, 14) des erfassten Gestells (10) der axialen Öffnungsbreite (D) der Fassung (11) entspricht.

10. Verfahren nach einem der vorhergehenden Ansprüche, wobei die Erfassung einer axialen oder radialen Abmessung eines Abschnitts (21) eines Randes (13, 14) des Gestells (10) oder einer axialen oder radialen Abmessung des Profils (18A) der Fassung (11) dieses Randes dank eines Geräts zum Ablesen der Form (1) des Gestells (10) ausgeführt wird, das einen Fühler (8) umfasst, der geeignet ist, um die Fassungen (11) des Gestells (10) abzutasten.

11. Verfahren nach Anspruch 8 und 10, wobei die Erfassung einer axialen Abmessung eines Randes (13, 14) des Gestells (10) eine Abtastung mindestens eines der axialen Einspannelemente (4A) umfasst.

12. Verfahren nach Anspruch 10, wobei die Erfassung einer axialen oder radialen Abmessung eines Abschnitts (21) eines Randes (13, 14) des Gestells (10) oder einer axialen oder radialen Abmessung eines Profils der Fassung (11) dieses Randes eine Abtastung des ganzen Profils (18), oder eines Teils davon, dieses Randes (13, 14) des Gestells (10) umfasst.

## Claims

1. Method for automatically detecting the material of a rimmed spectacle frame (10), comprising the following steps:
- acquiring a radial or axial dimension of a section (21) of a rim (13, 14) of the frame (10) or of a radial or axial dimension of a profile (18A) of a bezel (11) of this rim (13, 14);
- comparing this radial or axial dimension of a section (21) of the rim (13, 14) or of a profile (18A) of the bezel (11) with a preset threshold value; and
- determining the material of the frame (10) depending on this comparison.

2. Method for automatically detecting the material of a spectacle frame (10) according to the preceding claim, in which, if the radial or axial dimension of a section (21) of the rim (13, 14) or of a profile (18A) of the bezel (11) is larger than said preset threshold value, the frame is made of plastic, whereas if the radial or axial dimension of a section (21) of the rim (13, 14) or of a profile (18A) of the bezel (11) is smaller than said preset threshold value, the frame is made of metal.

3. Method for reading the shape of a rimmed spectacle frame (10) depending on the material of the frame, comprising the following steps:
- acquiring a radial or axial dimension of a section (21) of a rim (13, 14) of the frame (10) or a radial or axial dimension of a profile (18A) of a bezel (11) of this rim (13, 14);
- comparing this radial or axial dimension of a section (21) of the rim (13, 14) or of a profile (18A) of the bezel (11) with a preset threshold value, so as to determine the material of the frame; and
- reading the shape of the frame (10) in a reading cycle calculated, depending on this comparison, so as to take into account the material of the frame: if the radial or axial dimension of the section (21) of the rim (13, 14) or of the profile (18A) of the bezel (11) is smaller than said preset threshold value, said cycle for reading the shape of the frame (10) comprises a step of acquiring the geometry of the profile (18A) of the bezel (11) and if this radial or axial dimension of the section (21) of the rim (13, 14) or of the profile (18A) of the bezel (11) is larger than said preset threshold value, said cycle for reading the shape of the frame (10) does not comprise a step of acquiring the geometry of the profile (18A) of the bezel (11).

4. Method for reading the shape of a rimmed spectacle frame (10) according to the preceding claim, in which, if the radial or axial dimension of a section (21) of the rim (13, 14) or of a profile (18A) of the bezel (11) is larger than said preset threshold value, the reading of the longitudinal trace (12) of the bezel (11) of the frame is carried out at a given speed that is said to be rapid, whereas if the radial or axial dimension of a section (21) of the rim (13, 14) or of a profile (18A) of the bezel (11) is smaller than said preset threshold value, the reading of the longitudinal trace (12) of the bezel (11) of the frame is carried out at a speed that is substantially slower than said rapid speed.

5. Method for trimming a lens intended to be fitted in a given rimmed spectacle frame (10) the internal outline (12) of the rims (13, 14) of which has a known geometry, depending on the material of this frame, comprising the following steps:
- acquiring a radial or axial dimension of a section (21) of a rim (13, 14) of the frame (10) or of a radial or axial dimension of a profile (18A) of a bezel (11) of this rim (13, 14);
- comparing this radial or axial dimension of the rim (13, 14) or of the bezel (11) with a preset threshold value, so as to determine the material of the frame; and
- trimming the lens intended to be fitted in said frame (10) in a trimming cycle calculated depending on this comparison so as to take into account the material of the frame.

6. Trimming method according to the preceding claim, in which, if the radial or axial dimension of a section (21) of the rim (13, 14) or of a profile (18A) of the bezel (11) is smaller than said preset threshold value, each of the lenses is trimmed following a first set of trimming instructions, that is deduced from the known geometry of the internal outline (12) of the rims (13, 14) of the frame (10) and that corresponds to a first external outline of the lens, whereas, if the radial or axial dimension of a section (21) of the rim (13, 14) or of a profile (18A) of the bezel (11) is larger than said preset threshold value, each of the lenses is trimmed following a second set of trimming instructions, that is deduced from the known geometry of the internal outline (12) of the rims (13, 14) of the frame (10) and corresponds to a second external outline of the lens slightly larger than the first external outline of the lens.

7. Method according to one of the preceding claims, in which said acquired radial or axial dimension of a section (21) of the rim (13, 14) of the frame (10) corresponds to the axial thickness (E) of said rim (13, 14).

8. Method according to the preceding claim, in which the acquisition of the axial thickness of a rim (13, 14) of the frame (10) is achieved by virtue of a measuring device comprising:
- clamping means for holding the frame, comprising at least two elements (4A, 4B) for axially clamping one of the rims (13, 14) of the frame (10); and
- means for measuring the space between these two axially clamping elements (4A, 4B), used to acquire the axial thickness (E) of this rim (13, 14).

9. Method according to one of Claims 1 to 6, in which the acquired radial or axial dimension of the bezel (11) of a rim (13, 14) of the frame (10) corresponds to the axial aperture width (D) of said bezel (11).

10. Method according to one of the preceding claims, in which the acquisition of a radial or axial dimension of a section (21) of a rim (13, 14) of the frame (10) or of a radial or axial dimension of the profile (18A) of the bezel (11) of this rim is achieved by virtue of an apparatus (1) for reading the shape of the frame (10), comprising a stylus (8) suitable for tracing the shape of the bezels (11) of the frame (10).

11. Method according to Claims 8 and 10, in which the acquisition of an axial dimension of a rim (13, 14) of the frame (10) comprises tracing the shape of at least one of the axially clamping elements (4A).

12. Method according to Claim 10, in which the acquisition of a radial or axial dimension of a section (21) of a rim (13, 14) of the frame (10) or of a radial or axial dimension of a profile of the bezel (11) of this rim comprises tracing the shape of all or some of a profile (18) of this rim (13, 14) of the frame (10).
